# EUROPÄISCHE PATENTANMELDUNG

(11) **EP 4 261 181 A1**
(43) Veröffentlichungstag der Anmeldung: **18.10.2023**
(21) Anmeldenummer: 23164680.3
(22) Anmeldetag: 28.03.2023
(51) Int. Cl.: B66F 9/075, B66F 9/06, G06N 3/0464, B60W 30/09, G06V 10/80

(54) **UMFELD-ÜBERWACHUNGS-SYSTEM UND FLURFÖRDERZEUG MIT EINEM UMFELD-ÜBERWACHUNGS-SYSTEM**

(30) Priorität: 11.04.2022 DE 102022108769
(71) Anmelder: STILL GmbH, 22113 Hamburg (DE)
(72) Erfinder: SCHÜTHE, Dennis, 21255 Tostedt (DE); RUDALL, Yan, 22453 Hamburg (DE); BAKR, Mohamed, 21073 Hamburg (DE); ABEL, Bengt, 21335 Lüneburg (DE)
(74) Vertreter: Patentship Patentanwaltgesellschaft

(57) **Zusammenfassung**

Die Erfindung betrifft ein Umfeld-Überwachungs-System eines Flurförderzeugs (T) mit einer Sensorik (S) zur Umfelderfassung und einer, mit der Sensorik (S) in Wirkverbindung stehenden, Datenverarbeitungseinrichtung (D) zur Auswertung von Sensorsignalen der Sensorik (S). Es wird vorgeschlagen, dass die Datenverarbeitungseinrichtung (D) über ein Objekterkennungssystem verfügt, das mindestens ein, als gefaltetes neuronales Netzwerk (Convolutional Neural Network, CNN) ausgebildetes, künstliches neuronales Netzwerk umfasst. Ferner betrifft die Erfindung ein Flurförderzeug (T) mit einem Umfeld-Überwachungs-System.

## Beschreibung

Die Erfindung betrifft ein Umfeld-Überwachungs-System eines Flurförderzeugs mit einer Sensorik zur Umfelderfassung und einer, mit der Sensorik in Wirkverbindung stehenden, Datenverarbeitungseinrichtung zur Auswertung von Sensorsignalen der Sensorik.

Ferner betrifft die Erfindung ein Flurförderzeug mit einem Umfeld-Überwachungs-System.

Beim Betrieb von Flurförderzeugen in einem intralogistischen System kommen häufig Assistenzsysteme zum Einsatz, die eine Bedienung des Flurförderzeugs erleichtern sollen oder sogar einen automatisierten oder teilautomatisierten Betrieb ermöglichen sollen.

Überwachungseinrichtungen mit optischen Signalsendern und Signalempfängern kommen bei Flurförderzeugen in Systemen zur Kollisionsvermeidung oder zur Navigation zum Einsatz. Insbesondere bei automatisierten oder teilautomatisierten Flurförderzeugen spielen optische Sensoren eine große Rolle, damit sich das Flurförderzeug gefahrlos autonom bewegen kann oder zumindest der Fahrer mittels Assistenzsystemen unterstützt werden kann. So sind bereits autonome Flurförderzeuge im Einsatz, die sich fahrerlos durch Lagerhallen bewegen und selbsttätig Positionen zum Aufnehmen und Abgeben von Waren ansteuern. Ein Beispiel hierfür sind mobile Kommissionierroboter, die sich automatisiert durch ein Lager bewegen können und mit Hilfe eines Greifsystems, insbesondere eines Roboterarms, Objekte zum Beispiel aus einem Regal aufnehmen können.

In all diesen Fällen sind Systeme zur Umgebungsüberwachung, insbesondere zur Kollisionsvermeidung, erforderlich, damit ein sicherer Betrieb der Flurförderzeuge gewährleistet ist und ein unbeabsichtigtes Auffahren auf ein Hindernis oder gar eine Verletzung einer auf der Fahrbahn des Flurförderzeugs befindlichen Person verhindert wird.

Die gängigen Methoden zur Umgebungsüberwachung bei Flurförderzeugen basieren auf Distanzmessung mittels Laser, Ultraschall oder Radar.

Kamerabasierte Systeme werden bisher hauptsächlich zur Navigation eingesetzt. Hierzu werden üblicherweise paarweise Kameras zu Stereokamerasystemen zusammengeschaltet, die ein dreidimensionales Bild des gesamten umgebenden Raums aufnehmen. Dabei werden sehr hohe Datenmengen erzeugt, deren Verarbeitung einen erheblichen Rechenaufwand erfordert.

In jüngster Zeit steigt in der Intralogistik der Bedarf an Systemen zur Personenerkennung. Die Erkennung von Menschen bzw. Personen in der Nähe von Flurförderzeugen, insbesondere Gabelstaplern, kann Teil eines Fahrerassistenzsystems sein. Ein Kamerasystem, das Menschen bzw. Personen erkennen kann, kann die Sicherheit erhöhen, wenn die Sicht des Fahrers des Flurförderzeugs beim Lasttransport oder beim Rückwärtsfahren eingeschränkt ist. Das System kann als Warnsystem fungieren, um den Fahrer des Flurförderzeugs zu warnen, wenn sich eine Person in der Nähe des Flurförderzeugs befindet.

Der vorliegenden Erfindung liegt die Aufgabe zugrunde, Leistung und Zuverlässigkeit der Objekterkennung bei einem Umfeld-Überwachungs-System eines Flurförderzeugs zu verbessern.

Diese Aufgabe wird erfindungsgemäß dadurch gelöst, dass die Datenverarbeitungseinrichtung über ein Objekterkennungssystem verfügt, das mindestens ein, als gefaltetes neuronales Netzwerk (Convolutional Neural Network, CNN) ausgebildetes, künstliches neuronales Netzwerk umfasst.

Insbesondere basiert das Objekterkennungssystem auf Techniken der künstlichen Intelligenz (AI) zur Objekterkennung mithilfe von gefalteten neuronalen Netzwerken, die auch als "Convolutional Neural Networks" (CNNs) bezeichnet werden.

Bei Sicherheitsassistenzsystemen von Flurförderzeugen ist Redundanz entscheidend, um optimale Leistung und Zuverlässigkeit zu erreichen. Die Redundanz lässt sich in zwei Abschnitte unterteilen, Redundanz für Hardware und Redundanz für Software. Im Folgenden werden beide Redundanzen angesprochen.

Die Redundanz für Hardware wird gemäß einer bevorzugten Ausgestaltung der Erfindung insbesondere dadurch erhöht, dass die Sensorik mindestens zwei optische Sensoren, insbesondere Kameras, umfasst, und das Objekterkennungssystem dazu ausgebildet ist, die Sensorsignale der optischen Sensoren gleichzeitig auszuwerten.

Hierzu kann das Flurförderzeug insbesondere mit mehreren Kameras ausgestattet sein, die hauptsächlich einen Bereich um das Fahrzeugheck des Flurförderzeugs erfassen. Durch den Einsatz mehrerer Kameras und die gemeinsame Auswertung der Sensorsignale dieser Kameras kann ein Ausfall oder ein Fehler einer Kamera kompensiert werden.

Die Redundanz für Software für eine Redundanz der Objekterkennung wird gemäß einer vorteilhaften Ausgestaltung der Erfindung insbesondere dadurch erhöht, dass das Objekterkennungssystem über mehrere, parallel betriebene, gefaltete neuronale Netzwerke verfügt, die insbesondere mit unterschiedlichen Daten trainiert sein können. Es werden insbesondere mehrere gefaltete neuronale Netzwerke (CNNs) parallel betrieben, die insbesondere unterschiedliche Merkmale der Objekte erkennen und somit die Objekte auf unterschiedliche Weise detektieren. Insbesondere sind auf dem Objekterkennungssystem mehrere, parallel ablaufende, Computerprogramme installiert, die über Algorithmen verfügen, welche verschiedene oder gleiche gefaltete neuronale Netzwerke abbilden. Insbesondere können die verschiedenen Algorithmen mit unterschiedlichen Daten trainiert sein. Beispielsweise können die Algorithmen auf einem Nvidia Jetson auf verschiedenen GPUs ausgeführt werden.

Gemäß einer vorteilhaften Ausgestaltungsform der Erfindung verfügt das Objekterkennungssystem als eines der mehreren, parallel betriebenen, gefalteten neuronalen Netzwerke insbesondere über ein Skelett-Erkennungs-Netzwerk (Skeleton Network), das darauf trainiert ist, Menschen bzw. Personen durch Auswertung menschlicher Skelette zu erkennen. Dabei ist das Skelett-Erkennungs-Netzwerk insbesondere darauf trainiert, eine Person bzw. einen Mensch anhand von Skelettstrukturen und Bewegungen von Gelenken zu erkennen. Eine Menschen- bzw. Personenerkennung auf der Grundlage von Skeletten bietet den Vorteil hoher Robustheit gegenüber Hintergrundwechsel und ermöglicht aufgrund ihrer niedrigdimensionalen Darstellung eine effiziente Berechnung.

Gemäß einer vorteilhaften Ausgestaltungsform der Erfindung verfügt das Objekterkennungssystem als weiteres der mehreren, parallel betriebenen, gefalteten neuronalen Netzwerke insbesondere über ein Personen-Erkennungs-Netzwerk (Detectnet), das mit einem Personen-Datensatz (Peoplenet Dataset) trainiert ist. Dieses Netzwerk kann zum Beispiel mit einem Peoplenet-Datensatz trainiert werden, der insbesondere aus Open-Source-Datensätzen wie Coco- und Kitti-Datensätzen besteht.

Gemäß einer vorteilhaften Ausgestaltungsform der Erfindung verfügt das Objekterkennungssystem als weiteres der mehreren, parallel betriebenen, gefalteten neuronalen Netzwerke insbesondere über ein Vorhersage-Netzwerk zur Vorhersage der Anwesenheit eines Objekts innerhalb einer Region (RCNN-Network, insbesondere FasterRCNN), das mit einem Datensatz eines logistischen Systems trainiert ist. Dieses Netzwerk kann zum Beispiel sowohl auf Open-Source-Datensätzen als auch auf privaten Logistikdatensätzen trainiert sein.

Die verschiedenen parallel betriebenen, gefalteten neuronalen Netzwerke bilden zusammen Mehrfachobjekterkennungsnetzwerke, die kombiniert werden können.

Gemäß einer vorteilhaften Ausgestaltungsform der Erfindung ist die Datenverarbeitungseinrichtung insbesondere dazu ausgebildet, die Ausgänge der parallel betriebenen, gefalteten neuronalen Netzwerke positiv, d.h. bejahend, zu kombinieren, wobei alle Objekterkennungen berücksichtigt und Duplikate entfernt werden. Zur Entfernung der Duplikate kann zum Beispiel eine Methode angewendet werden, die unter der Bezeichnung "Non Maximum Suppression (NMS)" bekannt ist. Dabei handelt es sich um eine Methode aus der digitalen Bildverarbeitung. Um sicherzustellen, dass eine Kante nicht mehr als ein Pixel breit ist, sollen hierbei einzig die Maxima entlang einer Kante erhalten bleiben.

Gemäß einer alternativen und ebenfalls vorteilhaften Ausgestaltungsform der Erfindung besteht auch die Möglichkeit, die Ergebnisse der parallel betriebenen, gefalteten neuronalen Netzwerke mit einem Konsens-Ansatz zu kombinieren.

Insbesondere wird jedoch die Variante mit dem bejahenden Ansatz bevorzugt, da es wünschenswert ist, falsche Erfassungen wie verpasste Erfassungen zu haben.

Die Redundanz für Hardware wird gemäß einer weiteren vorteilhaften Ausgestaltung der Erfindung insbesondere dadurch erhöht, dass die Datenverarbeitungseinrichtung verschiedene Verarbeitungseinheiten, insbesondere Prozessorkerne eines Computers, aufweist.

Dabei wird insbesondere eine eingebettete Hardwareeinheit verwendet, die die Inferenz der verschiedenen neuronalen Netzwerke verarbeiten kann. Die Hardwareeinheit ist insbesondere derart konzipiert, dass sie die verschiedenen neuronalen Netzwerke auf verschiedenen Verarbeitungseinheiten mit unterschiedlichen Architekturen betreibt, die sich alle auf derselben Hardwareeinheit befinden. Dieses Konzept ermöglicht eine "N aus N"- oder "M aus N"-Redundanz, abhängig von den übergeordneten Sicherheitsanforderungen und den erforderlichen Ausfallraten.

Die Erfindung betrifft außerdem ein Flurförderzeug mit einem erfindungsgemäßen Umfeld-Überwachungs-System.

Dabei kann es sich insbesondere um ein manuell betriebenes Flurförderzeug handeln, das mit dem Umfeld-Überwachungs-System als Assistenzsystem für den Fahrer ausgestattet ist.

Gemäß einer bevorzugten Ausgestaltungsform der Erfindung steht das Umfeld-Überwachungs-System insbesondere mit einer Benutzerschnittstelle des Flurförderzeugs in Wirkverbindung, wobei das Umfeld-Überwachungs-System dazu ausgebildet ist, bei einer Objekterkennung einen Warnhinweis über die Benutzerschnittstelle auszugeben.

Gemäß einer Weiterbildung der Erfindung kann insbesondere das Umfeld-Überwachungs-System auch direkt in die Fahrzeugsteuerung des Flurförderzeugs eingreifen. Hierzu steht gemäß einer Ausführungsform der Erfindung das Umfeld-Überwachungs-System insbesondere mit einer Fahrzeugsteuerungseinrichtung des Flurförderzeugs in Wirkverbindung, wobei das Umfeld-Überwachungs-System dazu ausgebildet ist, bei einer Objekterkennung automatisch eine kollisionsvermeidende Reaktionsfunktion der Fahrzeugsteuerungseinrichtung einzuleiten.

Das Umfeld-Überwachungs-System lässt sich neben der Menschen- bzw. Personenerkennung auch für die Erkennung von Verkehrszeichen und/oder anderen Flurförderzeugen und/oder Bodenlinien einsetzen. Von besonderem Interesse sind insbesondere Objekte, die Sicherheitsanforderungen unterliegen können und daher redundant ausgeführt werden müssen. Dies ist insbesondere bei der Erkennung von Notausgängen oder Feuerlöschern der Fall.

Insgesamt ist die Erhöhung der Sicherheit in einem intralogistischen Umfeld, insbesondere in einem Lager, von großer Bedeutung. Das Umfeld-Überwachungs-System kann den Fahrer eines Flurförderzeugs warnen, wenn sich ein Mensch bzw. eine Person in der Nähe des Flurförderzeugs befindet. Dabei sind Kameras als optische Sensoren effektiver als die bereits verwendete Laser-Technologie, da viele Merkmale aus Bildern einer Kamera extrahiert werden können, die die Robustheit der Erkennung von Objekten erhöhen können.

Weitere Vorteile und Einzelheiten der Erfindung werden beispielhaft anhand des in den schematischen Figuren dargestellten Ausführungsbeispiels näher erläutert. Hierbei zeigen
- Figur 1: ein Flurförderzeug mit mehreren Kameras in der Seitenansicht,
- Figur 2: das Flurförderzeug der Figur 1 in der Draufsicht,
- Figur 3: eine Auswertung des Kamerabildes mittels eines Personen-Erkennungs-Netzwerks und
- Figur 4: eine Auswertung des Kamerabildes mittels eines Skelett-Erkennungs-Netzwerks sowie Kombination der Auswertungen.

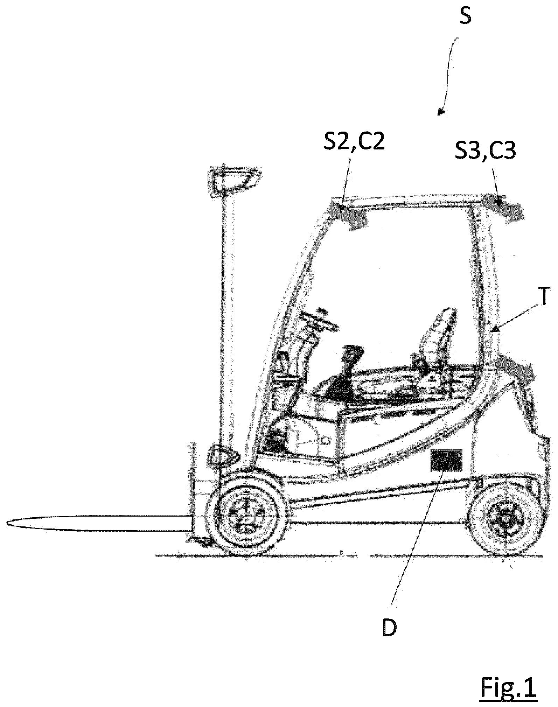

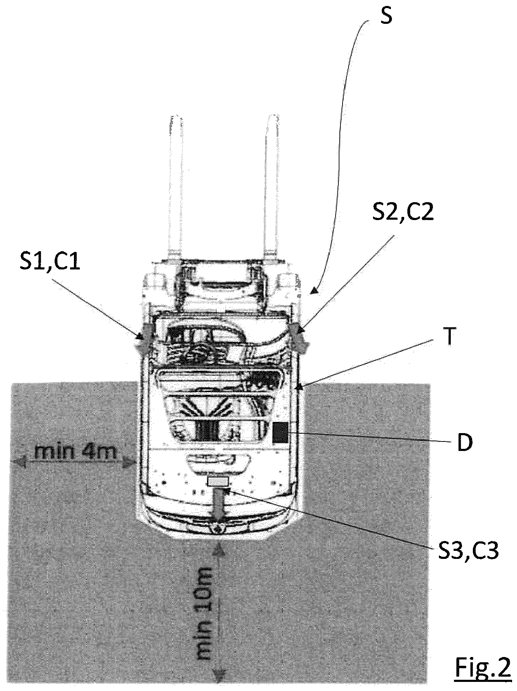

In der Figur 1 ist ein, beispielsweise als Gabelstapler ausgebildetes, Flurförderzeug T in der Seitenansicht dargestellt. Die Figur 2 zeigt dasselbe Flurförderzeug T in der Draufsicht.

Das Flurförderzeug T ist mit einer Sensorik S zur Umfelderfassung ausgestattet, die mehrere, beispielsweise drei, als Kameras C1, C2, C3 ausgebildete, optische Sensoren S1, S2, S3 umfasst. In der Seitenansicht der Figur 1 sind nur die beiden Kameras C2, C3 dargestellt. Die Kameras C1, C2, C3 sind - wie in Verbindung mit der Figur 2 ersichtlich sind - zum Fahrzeugheck des Flurförderzeugs T hin ausgerichtet und können einen Bereich um das Fahrzeugheck des Flurförderzeugs T erfassen. Im dargestellten Ausführungsbeispiel können die Kameras C1, C2, C3 beispielsweise einen Bereich von bis zu 10 Meter hinter dem Flurförderzeug T und einen Bereich von bis zu 4 Meter seitlich neben dem Flurförderzeug T zu beiden Fahrzeugseiten erfassen.

Die Kameras C1, C2, C3 stehen mit einer Datenverarbeitungseinrichtung D des Flurförderzeugs T in Verbindung. Die Datenverarbeitungseinrichtung D verfügt über ein Objekterkennungssystem mit mehreren, parallel betriebenen, jeweils als gefaltete neuronale Netzwerke (Convolutional Neural Network, CNN) ausgebildeten, künstlichen neuronalen Netzwerken. Hierzu sind Computerprogramme in der Datenverarbeitungseinrichtung D installiert, die Algorithmen zur Abbildung der jeweiligen neuronalen Netzwerke umfassen. Im vorliegenden Ausführungsbeispiel sind Algorithmen zu drei verschiedenen neuronalen Netzwerken installiert. Dabei handelt es sich beispielsweise um ein Skelett-Erkennungs-Netzwerk, insbesondere Skeleton Network, um ein Personen-Erkennungs-Netzwerk, insbesondere Detectnet, und um ein Vorhersage-Netzwerk zur Vorhersage der Anwesenheit eines Objekts innerhalb einer Region, insbesondere RCNN oder FasterRCNN. Die Ergebnisse der drei verschiedenen Algorithmen und somit der drei neuronalen Netzwerke werden in der Datenverarbeitungseinrichtung D kombiniert, insbesondere positiv, d.h. zustimmend, kombiniert, wobei alle Objekterkennungen der mehreren neuronalen Netzwerke berücksichtigt und Duplikate entfernt werden.

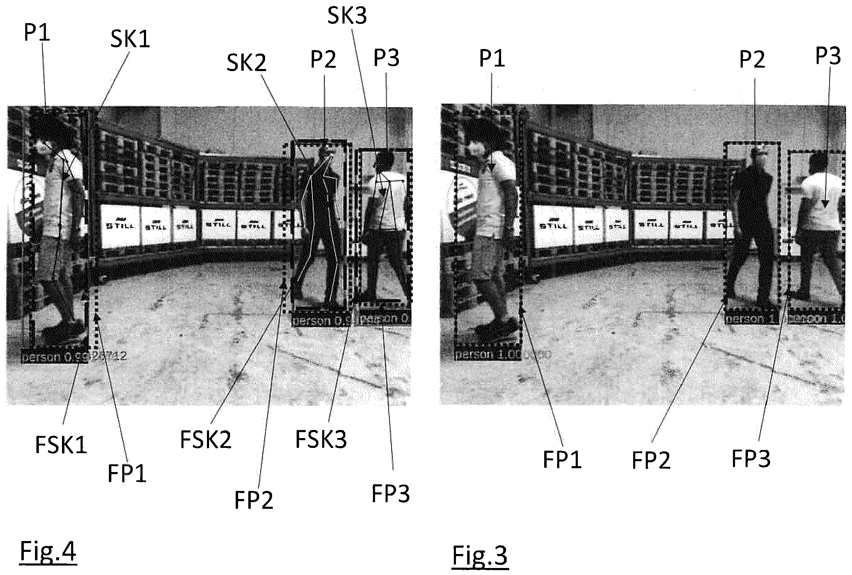

Die Figur 3 zeigt beispielhaft eine Auswertung des Kamerabildes der Kameras C1, C2, C3 mittels des Personen-Erkennungs-Netzwerks. Die von den Kameras C1, C2, C3 erfassten Personen bzw. Menschen P1, P2, P3 werden durch den Algorithmus des Personen-Erkennungs-Netzwerks erkannt und im Kamerabild mit Rahmen FP1, FP2, FP3 versehen.

In der Figur 4 ist beispielhaft eine Auswertung des Kamerabildes der Kameras C1, C2, C3 mittels des Skelett-Erkennungs-Netzwerks dargestellt. Dabei werden die Personen bzw. Menschen P1, P2, P3 anhand der Skelettstrukturen SK1, SK2, SK3 erkannt und im Kamerabild mit Rahmen FSK1, FSK2, FSK3 versehen. Weiterhin sind in der Figur 4 auch die Rahmen FP1, FP2, FP3 aus der Auswertung durch den Algorithmus des Personen-Erkennungs-Netzwerks der Figur 3 gezeigt. Beide Ergebnisse werden kombiniert.

Entsprechend können auch noch weitere neuronale Netzwerke parallel betrieben und kombiniert werden.

Die Datenverarbeitungseinrichtung D ist insbesondere dazu ausgebildet ist, bei der Erkennung eines Objekts, beispielsweise einer Personen bzw. Menschen P1, P2, P3, im Umfeld des Flurförderzeugs T automatisch eine Warnmeldung an den Fahrer des Flurförderzeugs T und/oder eine kollisionsvermeidende Reaktionsfunktion des Flurförderzeugs T einzuleiten.

Die Erfindung ist nicht auf ein Ausführungsbeispiel beschränkt, bei dem mit dem Objekterkennungssystem, das mehrere, parallel betriebene, jeweils als gefaltete neuronale Netzwerke (CNN) ausgebildete, künstliche neuronale Netzwerke umfasst, nur Personen bzw. Menschen P1, P2, P3 allein detektiert werden können. Mit dem Objekterkennungssystem, das mehrere, parallel betriebene, jeweils als gefaltete neuronale Netzwerke (CNN) ausgebildete, künstliche neuronale Netzwerke umfasst, können zusätzlich oder alternativ Objekte im Allgemeinen, beispielsweise Flurförderzeuge, insbesondere Handhubwagen, Paletten, Ladungsträger etc. und Personen bzw. Menschen, die in Wirkverbindung mit diesen Objekten stehen, erkannt werden. Die entsprechende Kamera C1, C2, C3 erfassen hierbei das Objekt und dahinter die Person bzw. den Menschen P1, P2, P3. Hierzu wird der Rahmen ("Bounding Box") FP1, FP2, FP3 bzw. FSK1, FSK2, FSK3 der Person bzw. des Menschen P1, P2, P3 größer gefasst und das Objekt mit einbezogen. Da eine Kollision mit dem Objekt zu einer Personenkollision führen würde, kann hierdurch eine Kollision mit der Person bzw. dem Mensch verhindert werden. Das Objekt inklusive Mensch/Person werden somit als Mensch/Person betrachtet, wodurch eine Kollision mit der Person bzw. dem Mensch wie oben beschrieben verhindert werden kann.

## Patentansprüche

1. Umfeld-Überwachungs-System eines Flurförderzeugs (T) mit einer Sensorik (S) zur Umfelderfassung und einer, mit der Sensorik (S) in Wirkverbindung stehenden, Datenverarbeitungseinrichtung (D) zur Auswertung von Sensorsignalen der Sensorik (S), **dadurch gekennzeichnet, dass** die Datenverarbeitungseinrichtung (D) über ein Objekterkennungssystem verfügt, das mindestens ein, als gefaltetes neuronales Netzwerk (Convolutional Neural Network, CNN) ausgebildetes, künstliches neuronales Netzwerk umfasst.

2. Umfeld-Überwachungs-System nach Anspruch 1, **dadurch gekennzeichnet, dass** die Sensorik (S) mindestens zwei optische Sensoren (S1, S2, S3), insbesondere Kameras (C1, C2, C3), umfasst, und das Objekterkennungssystem dazu ausgebildet ist, die Sensorsignale der optischen Sensoren (S1, S2, S3) gleichzeitig auszuwerten.

3. Umfeld-Überwachungs-System nach Anspruch 1 oder 2, **dadurch gekennzeichnet, dass** das Objekterkennungssystem über mehrere, parallel betriebene, gefaltete neuronale Netzwerke verfügt, die insbesondere mit unterschiedlichen Daten trainiert sein können.

4. Umfeld-Überwachungs-System nach Anspruch 3, **dadurch gekennzeichnet, dass** das Objekterkennungssystem über ein Skelett-Erkennungs-Netzwerk (Skeleton Network) verfügt, das darauf trainiert ist, Menschen durch Auswertung menschlicher Skelette zu erkennen.

5. Umfeld-Überwachungs-System nach Anspruch 3 oder 4, **dadurch gekennzeichnet, dass** das Objekterkennungssystem über ein Personen-Erkennungs-Netzwerk (Detectnet) verfügt, das mit einem Personen-Datensatz (Peoplenet Dataset) trainiert ist.

6. Umfeld-Überwachungs-System nach einem der Ansprüche 3 bis 5, **dadurch gekennzeichnet, dass** das Objekterkennungssystem über ein Vorhersage-Netzwerk zur Vorhersage der Anwesenheit eines Objekts innerhalb einer Region (RCNN-Network, insbesondere FasterRCNN) verfügt, das mit einem Datensatz eines logistischen Systems trainiert ist.

7. Umfeld-Überwachungs-System nach einem der Ansprüche 3 bis 6, **dadurch gekennzeichnet, dass** die Datenverarbeitungseinrichtung (D) dazu ausgebildet ist, Ausgänge der parallel betriebenen, gefalteten neuronalen Netzwerke positiv zu kombinieren, wobei alle Objekterkennungen berücksichtigt und Duplikate entfernt werden.

8. Umfeld-Überwachungs-System nach einem der Ansprüche 1 bis 7, **dadurch gekennzeichnet, dass** die Datenverarbeitungseinrichtung (D) verschiedene Verarbeitungseinheiten, insbesondere Prozessorkerne eines Computers, aufweist.

9. Flurförderzeug (T) mit einem Umfeld-Überwachungs-System nach einem der Ansprüche 1 bis 8.

10. Flurförderzeug (T) nach Anspruch 9, **dadurch gekennzeichnet, dass** das Umfeld-Überwachungs-System mit einer Benutzerschnittstelle des Flurförderzeugs (T) in Wirkverbindung steht, wobei das Umfeld-Überwachungs-System dazu ausgebildet ist, bei einer Objekterkennung einen Warnhinweis über die Benutzerschnittstelle auszugeben.

11. Flurförderzeug (T) nach Anspruch 9 oder 10, **dadurch gekennzeichnet, dass** das Umfeld-Überwachungs-System mit einer Fahrzeugsteuerungseinrichtung des Flurförderzeugs (T) in Wirkverbindung steht, wobei das Umfeld-Überwachungs-System dazu ausgebildet ist, bei einer Objekterkennung automatisch eine kollisionsvermeidende Reaktionsfunktion der Fahrzeugsteuerungseinrichtung einzuleiten.
